# NEUE EUROPÄISCHE PATENTSCHRIFT

(11) **EP 2 802 781 B2**
(45) Veröffentlichungstag und Bekanntmachung des Hinweises auf die Entscheidung über den Einspruch: **09.08.2023**
(45) Hinweis auf die Patenterteilung: 16.11.2016
(21) Anmeldenummer: 13708725.0
(22) Anmeldetag: 27.02.2013
(51) Int. Cl.: F15B 13/08, F16K 31/04

(54) **GASREGELEINHEIT IN MODULARER BAUWEISE UND GASREGELVENTIL**
MODULAR PRESSURE REGULATING DEVICE AND VALVE
RÉGULATEUR DE PRESSION DE GAZ MODULAIRE ET SOUPAPE DE RÉGULATION DE GAZ

(30) Priorität: 27.03.2012 DE 102012102645
(43) Veröffentlichungstag der Anmeldung: 19.11.2014
(73) Patentinhaber: EBM-PAPST Landshut GmbH, 84030 Landshut (DE)
(72) Erfinder: KEBER, Roland, 84109 Wörth a. d. Isar (DE); KLINK, Hans-Joachim, 88453 Erolzheim (DE); VROLIJK, Enno, 7751DX Dalen (NL)
(74) Vertreter: Staeger & Sperling Partnerschaftsgesellschaft mbB
(86) Internationale Anmeldenummer: PCT/EP2013/053926
(87) Internationale Veröffentlichungsnummer: WO 2013/143799

(56) Entgegenhaltungen:
- EP-A1- 1 382 907
- EP-A2- 0 757 200
- EP-A2- 1 039 229
- EP-A2- 1 084 357
- WO-A1-2005/088194
- WO-A1-2006/003684
- CN-A- 102 072 344
- DE-A1- 10 306 001
- DE-A1- 10 330 067
- DE-A1- 19 534 285
- DE-C1- 10 205 857
- JP-A- S6 131 778
- JP-A- 2001 317 652
- JP-A- 2004 125 113
- JP-A- 2005 023 952
- JP-A- 2006 057 820
- US-A- 4 643 394
- US-A- 5 642 756
- US-A- 6 047 718
- US-A1- 2007 205 384

## Beschreibung

Die Erfindung betrifft eine Gasregeleinheit in modularer Bauweise, insbesondere zur Regelung der einem Gasbrenner zuzuführenden Gasmenge, sowie ein in seiner Gesamtheit als Modul ausgebildetes Gasregelventil, das in einer derartigen, modular aufgebauten Gasregeleinheit verwendbar ist.

Aus dem Stand der Technik sind verschiedene Gasregelventile und Gassicherheitsventile zur Verwendung bei Gas-/Luft-Mischeinheiten und insbesondere bei Gasbrennern bekannt. Die europäische Patentanmeldung EP 0 834 695 A1 offenbart eine Mischvorrichtung für Gasbrenner, in deren Gehäuse Elektromagnetisch betriebene Schließelemente angeordnet sind, um einen Gasfluss zu einem Ventilsitz zu öffnen und zu schließen. Der Ventilsitz selbst ist dabei durch das Gehäuse bzw. daran einteilig ausgebildete Abschnitte der Mischvorrichtung gebildet. Die in diesem Stand der Technik verwendeten Flachventile sind zum Regeln der Gasmenge ungeeignet, da sich ihre Einstellung im Wesentlichen auf die Stellungen "Auf" und "Zu" beschränken. Durch die Verwendung von Teilen des Gehäuses der Mischvorrichtung als Ventilsitz muss dieses zumindest in diesem Bereich mit einer besonderen Oberfläche ausgebildet sein, um die Abdichtung gewährleisten zu können. Dies erfordert nach der Fertigung des Gehäuses üblicherweise aufwendige Nacharbeiten am Ventilsitz.

Die US 5,642,756 A, DE 195 34 285 A1 und US 2007/0205384 A1 offenbaren weitere Ventillösungen aus unterschiedlichen Anwendungsgebieten.

Ferner ist aus der EP 2 048 439 A1 bekannt, einen Gasregler mit Ventilkörper in ein Radialgebläsegehäuse zu integrieren, und den Ventilsitz des ganzen Reglers unmittelbar an einem im Inneren liegenden Gehäuseteil anzuordnen.

Bei vielen der bekannten Lösungen ist jedoch nachteilig, dass die Gasregelventile beziehungsweise Gassicherheitsventile speziell auf eine bestimmte Gehäuseform der Mischvorrichtung oder des Gebläses abgestimmt sein müssen und jeweils für nur dieses eine Produkt verwendbar sind.

Ausgehend von dieser Problematik ist es die Aufgabe der Erfindung, eine Gasregeleinheit und ein darin verwendbares Gasregelventil bereitzustellen, die in verschiedenen Gehäusetypen, insbesondere von Mischvorrichtungen oder Gebläsen, einsetzbar sind. Ferner ist Aufgabe der Erfindung, die Montagezeit der für die Gasregelung zuständigen Einheiten zu reduzieren und die für die Funktion und Dichtheit durchzuführenden Tests zu verkürzen.

Diese Aufgaben werden gelöst durch ein Gasregelventil nach Anspruch 1 sowie eine Gasregeleinheit nach Anspruch 7.

Ein erfindungsgemäßes Gasregelventil umfasst ein Gehäuse mit Gaseinlass, ein in dem Gehäuse gehaltenen, in einer ersten und zweiten axialen Richtung beweglich angeordneten Ventilkörper, einen Ventilsitz, mindestens eine erste Feder, die in der ersten axialen Richtung auf den Ventilkörper wirkt, eine in axialer Richtung bewegliche, mit dem Ventilkörper mittelbar in Eingriff stehende Achse, ein auf die Achse wirkender Antrieb, der diese und somit den Ventilkörper in vordefinierten Längenabschnitten in axialer Richtung zum Öffnen und Schließen des Gasregelventil bewegt, wobei der Antrieb ein elektronisch angesteuerter Schrittmotor und das Gasregelventil in seiner Gesamtheit als auswechselbares Modul ausgebildet ist. Das Gasregelventil muss hierbei keinerlei Sicherheitsfunktionen erfüllen.

Unter "auswechselbares Modul" ist zu verstehen, dass das Gasregelventil als eigenständige Komponente ausgebildet und mit weiteren Komponenten kombinierbar ist. Durch die Ausbildung als Modul kann das Gasregelventil über eine passende Schnittstelle an beliebigen, dafür vorgesehenen Bauteilen angebracht und wieder entfernt werden. Die Achse ist vorzugsweise metallisch.

In einer bevorzugten Ausführung ist zumindest ein Teil des Gehäuses als eine Einsatzkartusche ausgebildet, wodurch das als Modul ausgebildete Gasregelventil kompakt aufgebaut und in Gehäusen von Gebläsevorrichtungen oder Gas-Luft-Mischvorrichtungen eingesteckt oder eingeschraubt werden kann. Hierbei ist günstig, wenn an dem als Einsatzkartusche ausgebildeten Gehäuse außenseitig ein Gewinde, ein Flansch oder ein vergleichbares lösbares Befestigungsmittel vorgesehen ist. Auch ist vorteilhaft, dass in eine derartige Einsatzkartusche die den Gasfluss beziehungsweise die Gasmenge bestimmenden Bauteile aufgenommen sind, und sich somit, wenn die Kartusche in dem entsprechenden Gehäuse eingeschraubt ist, im Gasströmungsweg befinden. Die "Einsatzkartusche" ist hierbei definiert als ein Gehäuseteil, der geeignet ist, in ein anderes Bauteil eingesetzt zu werden, ohne dass an dem anderen Bauteil neben einer entsprechenden Formanpassung weitergehende konstruktionsbedingte Maßnahmen bereitgestellt sein müssen.

Im Gegensatz zu der im Stand der Technik EP 0 834 695 A1 verwendeten pneumatischen Regelung der Gasmenge und den in den Schriften US 5,642,756 A, DE 195 34 285 A1 und US 2007/0205384 A1 offenbarten Lösungen, ist es erfindungsgemäß vorgesehen, als Antrieb des Gasregelventils ein elektronisch angesteuerten Schrittmotor zu verwenden. Über den Schrittmotor und die sich in erster axialer Richtung versetzende Achse wird eine ansteigende Kraft auf den Ventilkörper ausgeübt, welche der Federkraft der ersten Feder entgegenwirkt, bis sich der Ventilkörper von dem Ventilsitz löst und den Gasfluss freigibt.

In einer vorteilhaften Ausführung ist das Gasregelventil mit einem Direktdruckregler ausgebildet, wobei der Ventilkörper im Zentrum von einer Membran gehalten ist und der Gaseinlass in axialer Richtung zwischen Membran und Ventilsitz erfolgt sodass ein Gasdruck in der ersten axialen Richtung gegen die Membran und in der zweiten, entgegengesetzten axialen Richtung gegen den Ventilkörper bzw. gegen sich in radial nach außen erstreckende Abschnitte des Ventilkörpers wirkt. Der Ventilkörper befindet sich somit in einem Kräftegleichgewicht, beeinflusst durch die Federkraft der ersten Feder, den Außendruck sowie den Gasdruck gegen die den Ventilkörper haltende Membran in eine erste axiale Richtung und den Gasdruck und die Kraft des Antriebs auf den Ventilkörper in eine zweite axiale Richtung.

Hierdurch wird gewährleistet, dass nur ein kleiner Hub des Antriebs, in bevorzugter Ausführung des Schrittmotors, nötig ist, um den Ventilkörper in vordefinierter Weise von dem Ventilsitz in die zweite axiale Richtung zu lösen und somit eine vordefinierte Gasmenge pro Zeit freizugeben. Durch die erfindungsgemäße Ausbildung des Direktdruckreglers mit Kräftegleichgewicht ist ermöglicht, größere Durchtrittsdurchmesser von 15 - 35mm, vorzugsweise 15 - 25mm für den Gasweg bereitzustellen, sodass der notwendige Hub des Ventilkörpers vom Ventilsitz drastisch reduziert ist und 3 - 8mm, vorzugsweise 3 - 5 mm nicht übersteigt. Bei Gasregelventilen gemäß dem Stand der Technik ist ein Hub von 10mm nötig. Durch die Verringerung des notwendigen Hubs in die axiale Richtung kann der die diese Axialbewegung erzeugende Schrittmotor in einer sehr einfachen und vergleichsweise kostengünstigen Ausbildung vorliegen, was zu einer erheblichen Reduzierung der Gesamtkosten des Gasregelventils in modularer Bauweise führt. Auch der Durchmesser des Gehäuses und die Größe des freigegebenen Gaswegs des Gasregelventils sind durch die Bereitstellung des Kräftegleichgewichts gegenüber aus dem Stand der Technik bekannten Reglern viel größer dimensionierbar, ohne die Regelgenauigkeit negativ zu beeinträchtigen. Als Außendurchmesser des Gehäuses werden erfindungsgemäß eine Größe "c" von 30-50mm, vorzugsweise 30-40mm, als Größe des freigegebenen Gaswegs mit einer Spaltweite "b" von 2 - 5mm bevorzugt.

Die Bewegung des Ventilkörpers in die zweite axiale Richtung wird erfindungsgemäß ferner noch genauer dadurch geregelt, dass zwischen der Achse und dem Ventilkörper eine zweite Feder angeordnet ist, die in die zweite axiale Richtung auf den Ventilkörper wirkt. Bei Verwendung eines Schrittmotors können dann über einzelne Schritte und Halbschritte die vorbestimmten Öffnungsstellungen des Ventilkörpers elektronisch angesteuert werden. Zur Begünstigung der kompakten Bauweise ist in einer Ausführung vorgesehen, dass die zweite Feder innerhalb des hohl ausgebildeten Ventilkörpers angeordnet ist und sich in axialer Richtung entlang der Achse des Antriebs, beziehungsweise Schrittmotors, erstreckt. In einer vorteilhaften erfindungsgemäßen Ausführung ist der Ventilsitz durch Teile des Gehäuses des Gasregelventils, insbesondere durch Teile der Einsatzkartusche gebildet, sodass auf zusätzliche Bauteile innerhalb des modularen Gasregelventil soweit wie möglich verzichtet und somit die Bauweise vor allem in axialer Richtung kleinstmöglich gestaltet werden kann. In einer vorteilhaften Ausführung ist vorgesehen, dass sich von dem als Einsatzkartusche ausgebildeten Gehäuse des Gasregelventils Abschnitte in radialer Richtung zum Zentrum erstrecken und mit ihrem radial nach innen weisenden Randbereich den Ventilsitz bilden.

Der Direktdruckregler kann von dem Antrieb, insbesondere dem Schrittmotor, durch eine vorzugsweise metallische Dichtplatte getrennt sein, wobei die Dichtplatte zwischen dem Schrittmotor und dem Membran angeordnet wird. Im zentralen Bereich der Dichtplatte ist eine Aussparung vorgesehen, durch die sich die Achse hindurch erstreckt und eine mittelbare Verbindung zwischen dem Antrieb, insbesondere dem Schrittmotor, und dem Ventilkörper herstellt. Die Dichtplatte dichtet den Direktdruckregler nicht absolut, sondern nur insoweit, wie es die Normen (zum Beispiel: DIN-EN 13611) fordern, wobei im Fehlerfall eine gewisse Gasmenge (weniger 70 Liter/Stunde) über die Aussparung der Dichtplatte entweichen darf. Eine Ausführungsform des Gasregelventils mit Dichtplatte ist dahingehend günstig, dass der verwendete Antrieb, insbesondere Schrittmotor, selbst nicht gasdicht ausgebildet sein muss und somit deutlich kostengünstiger ist.

Gemäß einem weiteren Aspekt der Erfindung wird das oben dargestellte Gasregelventil zusammen mit einem ebenfalls als Modul ausgebildeten Gassicherheitsventil zu einer Gasregeleinheit in modularer Bauweise, insbesondere zur Regelung der einem Gasbrenner zuzuführenden Gasmenge, kombiniert. Das als Modul ausgebildete Gasregelventil ist hierbei in Reihe mit dem als Modul ausgebildeten Gassicherheitsventil derart angeordnet, dass sich das Gassicherheitsventil in Strömungsrichtung gesehen vor dem Gasregelventil befindet.

Durch die Verwendung zweier jeweils modular aufgebauter Bauteile ist die Entwicklungszeit reduziert, da jedes Modul nur einmal entwickelt werden muss, später aber in verschiedenen Endprodukten, beispielsweise in Lüftergehäusen, Gasventilgehäusen oder Gas-Luft-Krümmern, verwendet werden können. Ferner kann jedes der Module separat gefertigt und in seiner Funktion getestet werden, wobei die Testvorrichtungen für die modularen Ventile wesentlich kleiner sein können, als diejenigen, die im Stand der Technik für die Gesamtbauteile, z.B. Lüftergehäuse mit daran angeordneten Sicherheitsventilen und einem Gasregelventil, verwendet werden mussten.

Auch ist an der modularen Bauweise von Vorteil, dass mehrere der jeweiligen als Module gebildeten Gasregelventile und Gassicherheitsventile parallel an den jeweiligen Endprodukte anbringbar sind und somit auf einfache und kostengünstige Weise größere Leistungen und Modulationsbreiten erzielbar sind.

In einer bevorzugten Ausführung ist für die Gasregeleinheit nur ein einziges Gassicherheitsventil vorgesehen und dieses als Doppel-Sicherheitsventil ausgebildet. Somit kann der Notwendigkeit einer doppelten Abdichtung von im Gasweg angeordneten Bauteilen Rechnung getragen werden, ohne dass der hierfür notwendige Bauraum groß wäre, wie es bei einer Verwendung von zwei separat angeordneten Sicherheitsventilen der Fall wäre. Ferner ist hierbei günstig, das Gassicherheitsventil als Koaxial-Ventil auszubilden, da dieses besonders kompakt baut und die auf dem Bauteil, auf dem die Ventile letztlich angeordnet werden, notwendige Fläche gegenüber den aus dem Stand der Technik bekannten Lösungen geringer ist.

Neben dem Gasregelventil ist bevorzugt, dass auch das Gassicherheitsventil ein kartuschenartiges Gehäuse mit Mitteln zur lösbaren Befestigung an einem Gasventilgehäuse, Lüftergehäuse oder Krümmer aufweist. Ferner ist in einer vorteilhaften Ausführungsform vorgesehen, dass an den kartuschenartigen Gehäuseteilen der beiden modularen Ventile jeweils außenseitig angeordnete Dichtmittel zur Abdichtung der Module an dem Gasventilgehäuse, Lüftergehäuse oder Krümmer vorgesehen sind. Durch die kartuschenartige Ausbildung der jeweiligen Gehäuse kann dies in Form von kostengünstigen Dichtringen erfolgen, die zwischen dem Gasventilgehäuse, Lüftergehäuse oder Krümmer und dem jeweiligen Modul dichtend eingebracht sind.

Günstig ist ferner, dass an das Gasventilgehäuse, Lüftergehäuse oder Krümmer hinsichtlich der Materialbeschaffenheit oder Oberfläche keine besonderen Anforderungen nötig sind, da sowohl die Leckagesicherung als auch die Gasregelung ausschließlich über die modularen Gassicherheitsventile und das Gasregelventil erfolgt. Es muss lediglich ein zu den Modulen bzw. kartuschenartigen Gehäusen jeweils passender Aufnahmebereich vorgesehen werden, in den das jeweilige Modul eingesteckt und darin lösbar befestigt wird. In einer besonders einfachen Ausführung weisen die modular gebildeten Ventile und das Gasventilgehäuse, Lüftergehäuse oder der Krümmer jeweils zueinander passende Gewinde auf. Es sind aber auch andere Befestigungsarten wie Flansch-Verschraubungen, Clipverbindungen oder weitere im Stand der Technik bekannte Lösungen möglich.

Eine kombinierte Einheit aus Gasventilgehäuse, Lüftergehäuse oder Krümmer mit dem als Modul ausgebildeten Gasregelventil und dem als Modul ausgebildeten Gassicherheitsventil ist hinsichtlich seiner Baugröße um mindestens 20% verkleinert, als bisher verwendete entsprechende Einheiten, bei denen Gasregelventile und Gassicherheitsventile in nicht modularer Bauweise eingesetzt wurden. Bei einer Verwendung eines Doppel-Sicherheitsventils in koaxialer Bauweise, wobei ein zweites Sicherheitsventil eingespart wird, ist die Gesamtbaugrößenreduzierung im Vergleich zu aus dem Stand der Technik bekannten Lösungen mindestens 40%.

Andere vorteilhafte Ausbildungen der Erfindung sind in den Unteransprüchen gekennzeichnet, beziehungsweise werden nachstehend zusammen mit der Beschreibung der bevorzugten Ausführung der Erfindung anhand der Figuren näher dargestellt. Es zeigen:
Fig.1 eine seitliche Schnittansicht eines Gasregelventils mit gasdichtem Antrieb;
Fig.2 eine seitliche Schnittansicht eines Gasregelventils mit nichtgasdichtem Antrieb;
Fig.3 eine Gasregeleinheit mit Gasregelventil mit koaxial Doppel-Sicherheitsventil;
Fig.4 eine perspektivische Darstellung eines Lüfters mit einsetzbarem modular ausgebildetem Gasregelventil und Gassicherheitsventil; und
Fig.5 eine perspektivische Ansicht Gasventilgehäuses mit einsetzbarem modular ausgebildetem Gasregelventil und Gassicherheitsventil.

Die Figuren zeigen die zum Verständnis der Erfindung notwendigen Bauteile beispielhaft schematisch, wobei gleiche Bauteile mit jeweils gleichen Bezugszeichen gekennzeichnet sind.

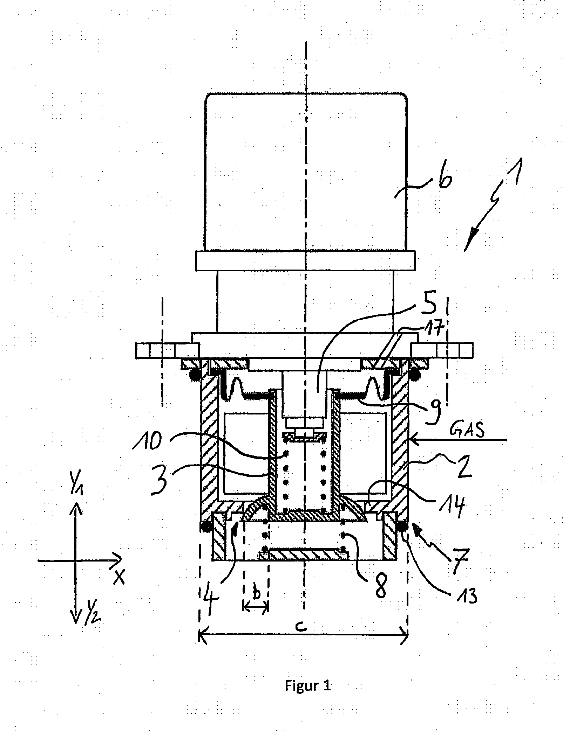

In Figur 1 ist ein Gasregelventil 1 mit einem als Schrittmotor 6 ausgebildeten Antrieb, der auf einem Direktdruckregler angeordnet ist, gezeigt. Das Gasregelventil 1 ist in seiner Gesamtheit als auswechselbares Modul ausgebildet, wobei das Gehäuse 2 der Teil des Moduls ist, der in das jeweilige Endprodukt (z.B. Gasventilgehäuse, Lüftergehäuse, Krümmer eingesteckt und darin fixiert wird. Das Gehäuse 2 ist hierfür als Kartusche 7 gebildet, die im Betrieb im Bereich des Gasstroms angeordnet ist und die die Gasmenge pro Zeit regelnden Bauteile aufnimmt. Ein hohl ausgebildeter Ventilkörper 3 ist in dem kartuschenartigen Gehäuse 2 von einer Membran 9 gehalten, wobei die Membran 9 an dem Gehäuse 2 befestigt ist und eine flächige Abgrenzung zu dem Schrittmotor 6 bildet. Eine Ausgleichsöffnung 17 ermöglicht den Druckausgleich im Bereich oberhalb der Membran 9. Das Gehäuse 2 weist einen sich in radialer Richtung zum Zentrum hin erstreckenden Abschnitt 14 auf, der den Ventilsitz 4 für den Ventilkörper 3 bildet. Zwischen Gehäuse 2 und Ventilkörper 3 ist eine erste Feder 8 angeordnet, die in der ersten axialen Richtung Y1 auf den Ventilkörper 3 wirkt, und diesen gegen den Ventilsitz 4 drückt. Der Gaseinlass in das Gasregelventil 1 erfolgt in axialer Richtung zwischen der Membran 9 und dem Ventilsitz 4, sodass der Gasdruck in der ersten axialen Richtung Y1 gegen die Membran 9 und in der zweiten, entgegengesetzten axialen Richtung Y2 gegen den Ventilkörper 3 beziehungsweise gegen an dem Ventilkörper 3 sich in radialer Richtung nach außen hin erstreckende Abschnitte wirkt. Die Krafteinwirkung durch den Gasdruck auf den Ventilkörper 3 erfolgt somit in beide axialen Richtungen Y1, Y2 und ist in der Summe im Wesentlichen gleich Null. Der Schrittmotor 6 weist eine Achse 5 auf, über die eine Kraft in die zweite axiale Richtung Y2 mittelbar auf den Ventilkörper 3 aufgebracht werden kann, um diesen zu versetzen. In der gezeigten Ausführung ist innerhalb des Ventilkörpers 3 eine zweite, sich in axialer Richtung erstreckender Feder 10 geordnet, auf welche die Achse 5 des Schrittmotors 6 in die zweite axiale Richtung Y2 wirkt, um den Ventilkörper 3 vom Ventilsitz 4 zu lösen. Die Krafteinwirkung durch den Schrittmotor 6 über die zweite Feder 10 erfolgt gegen die Kraft der ersten Feder 8 und den außerhalb des Gasregelventils 1 herrschenden Außendruck. Der Ventilkörper 3 befindet sich über die Kräfte des Gasdrucks, und der Federkräfte in einem Kräftegleichgewicht, sodass jeder Axialversatz der Achse 5 in der zweiten axialen Richtung Y2 unmittelbar einen entsprechenden Hub des Ventilkörpers 3 vom Ventilsitz 4 bedeutet. Durch dieses Kräftegleichgewicht ist es möglich, den Durchmesser des Gehäuses 2, des Ventilkörpers 3 und des durch den Ventilkörper 3 freigegebenen Gaswegs (Ventilspalt mit Öffnungsweite b) größer auszubilden, sodass der absolut notwendige Hub in axialer Richtung des Ventilkörpers 3 vom Ventilsitz auf 3mm begrenzt werden kann. Das Gehäuse 2 weist einen Außendurchmesser von 30-50mm, der Ventilkörper einen Außendurchmesser von 15-25mm und der für den Gasweg am Ventilsitz 4 freigegebene umlaufende Ventilspalt eine Öffnungsweite von 3 - 5mm auf.

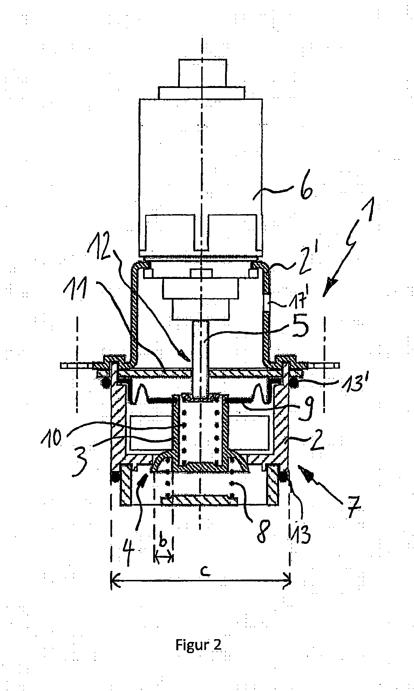

In Figur 2 ist das Gasregelventil 1 mit einem zu dem aus Figur 1 identischem Direktdruckregler umfassend das Gehäuse 2 als Kartusche 7, den Ventilkörper 3, den Ventilsitz 4, die Federn 8 und 10 sowie die am Ventilsitz 4 angeordnete Membran 9. Im Unterschied zu der Ausführung gemäß Figur 1 ist ein nicht-gasdichter Schrittmotor 6 verwendet, der über ein Obergehäuse 2' auf dem Gehäuse 2 des Gasregelventils 1 befestigt ist, wobei der Schrittmotor 6 über die Achse 5 mittelbar auf den Ventilkörper 3 wirkt und die Achse 5 als Verlängerungsstab zwischen dem Ventilkörper 3 und dem Schrittmotor 6 dient. Zwischen dem Schrittmotor 6 und dem Membran 3 ist eine Dichtplatte 11 angeordnet, die im zentralen Mittelbereich eine Aussparung 12 aufweist, durch die sich die Achse 5 hindurch erstreckt. Zwar kann über die Aussparung 12 eine gewisse Gasmenge entweichen, diese ist jedoch so gering, dass die international gültigen Normen eingehalten werden. Die Dichtplatte 11 ist in das Gehäuse 2 eingesetzt und über das den Schrittmotor 6 haltende Obergehäuse 2' an dem Gehäuse 2 befestigt. Durch die vorliegende Konstruktion kann ein nicht-gasdichter Schrittmotor 6 verwendet werden, der gegenüber einem gasdichten Schrittmotor um mindestens 30% kostengünstiger ist. An dem als Einsatzkartusche 7 ausgebildeten Gehäuse 2 sind Dichtmittel 13, 13' vorgesehen, die einen Gasaustritt außen an dem Gasregelventil 1 vorbei verhindern. Das Obergehäuse 2' weist außenseitige Bohrungen auf, durch die nicht dargestellte Schrauben zur Festlegung des Gasregelventil 1an einem weiteren Bauteil fixierbar sind. In einer nicht dargestellten, alternativen Ausführung ist das Obergehäuse 2' als einfacher Bügel ausgeformt, erfüllt aber die identischen Funktionen. Zum Druckausgleich ist in dem Obergehäuse 2' eine Ausgleichsöffnung 17' vorgesehen

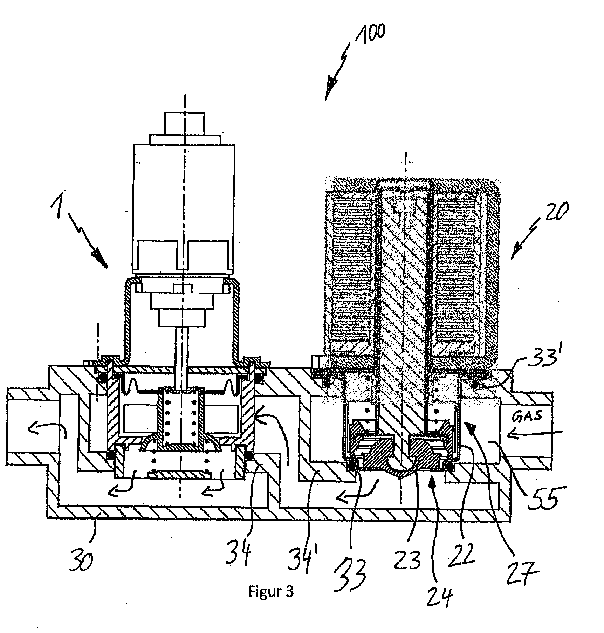

In Figur 3 ist eine Gasregeleinheit 100 zur Regelung der einem Gasbrenner zuzuführenden Gasmenge dargestellt, wobei das als Modul ausgebildete Gasregelventil 1 aus Figur 2 und ein als Modul ausgebildetes Gassicherheitsventil 20 in Reihe angeordnet sind, wobei sich in Strömungsrichtung gesehen das Gassicherheitsventil 20 vor dem Gasregelventil 1 befindet. Sowohl das Gasregelventil 1 als auch das Gassicherheitsventil 20 sind in einem Gasventilgehäuse 30 lösbar befestigt. Gegenüber den aus dem Stand der Technik vorbekannten Lösungen sind beide Ventile 1 und 20 als Module ausgebildet, sodass sie bis auf die zur Befestigung vorzusehenden Befestigungsmittel keine Anforderungen an das Gasventilgehäuse 30 stellen. Es muss nur der Raum 55 erhöhte Anforderungen erfüllen. Das Gassicherheitsventil 20 ist als koaxiales Doppel-Sicherheitsventil ausgebildet, sodass ein einziges Gassicherheitsventil 20 ausreicht, um die gesetzlich vorgeschriebene Absicherung gegen Gasaustritt zu gewährleisten. Auch das Gassicherheitsventil 20 weist eine in dem Gasventil 30 angeordnete Einsatzkartusche 27 auf, die durch den unteren Abschnitt des Gehäuses 22 gebildet ist. Die Art und Weise, derartige Gassicherheitsventile 20 elektronisch zu betreiben, um den Ventilkörper 23 von den Ventilsitzen 24 zu lösen und die Doppelabsicherung über die Federn zu gewährleisten ist aus dem Stand der Technik bekannt. Die erfindungsgemäße Verwendung einer Einsatzkartusche 27 am Gassicherheitsventil 20 ermöglicht, dass dieses modular in das Gasventilgehäuse 30 eingesteckt und daran befestigt werden kann. Als Befestigungsmittel kann vorgesehen sein, zusätzliche Schrauben anzubringen, oder unmittelbar an der Einsatzkartusche 27 und dem Gasventilgehäuse 30 ineinandergreifende Gewinde vorzusehen. Ferner wird die Einsatzkartusche 27 zweifach über Dichtmittel 33 und 33' am Gasventilgehäuse 30 abgedichtet. Das Gas tritt somit wie durch den Pfeil dargestellt von rechts seitlich in die Einsatzkartusche 27 ein und wird bei einem vom Ventilsitz 24 gelösten Ventilkörper 23 durch den bereitgestellten Gasdruck zu dem Gasregelventil 1 gedrückt, welches es über den Ventilsitz zum Gasauslass passiert. Zur Definition des Gaswegs weist das Gasventilgehäuse 30 entsprechende die Module aufnehmende Stege 34, 34' auf, an denen die Einsatzkartuschen 7 und 27 jeweils dichtend anliegen.

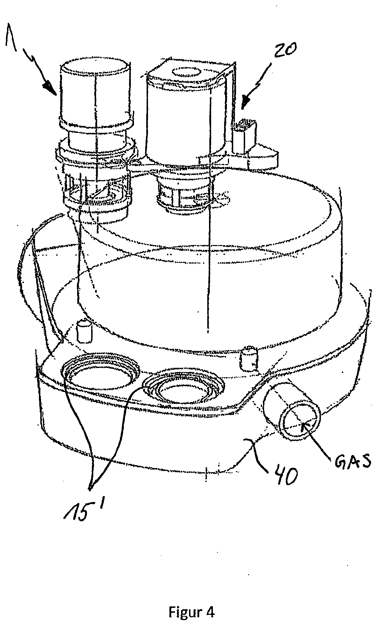

Figur 4 zeigt in perspektivisch schematischer Ansicht ein Lüftergehäuse 40, an dem Befestigungsmittel 15' in Form von Gewinden vorgesehen sind, in die das Gasregelventil 1 und das Gassicherheitsventil 20 einschraubbar sind.

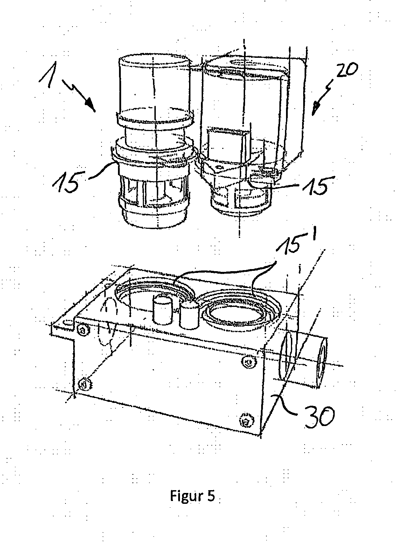

Figur 5 zeigt eine perspektivische Ansicht eines Gasventilgehäuses 30, mit zur oberseitigen Befestigung vorgesehenen Modulen eines Gasregelventiles 1 und eines Gassicherheitsventils 20, wobei das Gasregelventil 1 und das Gassicherheitsventil 20 mit Gewinden 15 versehen sind, die in das entsprechende Gewinde 15' am Gasventilgehäuse 30 einschraubbar sind.

## Patentansprüche

1. Gasregelventil umfassend
- ein Gehäuse (2) mit Gaseinlass,
- einen in dem Gehäuse (2) gehaltenen, in einer ersten (Y1) und zweiten axialen Richtung (Y2) beweglich angeordneten Ventilkörper (3),
- einen Ventilsitz (4),
- mindestens eine erste Feder (8), die in der ersten axialen Richtung (Y1) auf den Ventilkörper (3) wirkt,
- eine in axialer Richtung (Y1, Y2) bewegliche, mit dem Ventilkörper (3) mittelbar in Eingriff stehende Achse (5),
- ein auf die Achse (5) wirkender Antrieb (6), der diese und somit den Ventilkörper (3) in vordefinierten Längenabschnitten in axialer Richtung (Y1, Y2) zum Öffnen und Schließen des Gasregelventils (1) bewegt, wobei
- das Gasregelventil (1) in seiner Gesamtheit als auswechselbares Modul ausgebildet ist, wobei
- der Ventilkörper (3) von einer Membran (9) gehalten ist und der Gaseinlass in axialer Richtung zwischen Membran (9) und Ventilsitz (4) erfolgt, so dass ein Gasdruck in der ersten axialen Richtung (Y1) gegen die Membran (9) und in der zweiten, entgegengesetzten axialen Richtung (Y2) gegen den Ventilkörper (3) wirkt, wobei
- zwischen der Achse (5) und dem Ventilkörper (3) eine zweite Feder (10) angeordnet ist, die in die zweite axiale Richtung (Y2) unmittelbar auf den Ventilkörper (3) wirkt, und wobei die zweite Feder (10) innerhalb des hohl ausgebildeten Ventilkörpers (3) angeordnet ist.

2. Gasregelventil nach Anspruch 1, **dadurch gekennzeichnet, dass** zumindest ein Teil des Gehäuses (2) als eine Einsatzkartusche (7) ausgebildet ist.

3. Gasregelventil nach zumindest einem der vorigen Ansprüche, **dadurch gekennzeichnet, dass** der Antrieb (6) ein elektronisch angesteuerter Schrittmotor ist.

4. Gasregelventil nach dem vorigen Anspruch, **dadurch gekennzeichnet, dass** ein nicht-gasdichter Schrittmotor (6) verwendet wird.

5. Gasregelventil nach zumindest einem der vorigen Ansprüche, **dadurch gekennzeichnet, dass** der Ventilsitz (4) durch Teile des Gehäuses (2) i des Gasregelventils (1) gebildet ist.

6. Gasregelventil nach zumindest einem der vorigen Ansprüche 3 bis 5, **dadurch gekennzeichnet, dass** zwischen dem Schrittmotor (6) und der Membran (3) eine Dichtplatte (11) mit Aussparung (12) vorgesehen ist, wobei sich die Achse (5) durch die Aussparung (12) hindurch erstreckt.

7. Gasregeleinheit in modularer Bauweise, insbesondere zur Regelung der einem Gasbrenner zuzuführenden Gasmenge, umfassend ein als Modul ausgebildetes Gasregelventil (1) nach mindestens einem der Ansprüche 1 bis 6 und mindestens ein als Modul ausgebildetes Gassicherheitsventil (20).

8. Gasregeleinheit nach dem vorigen Anspruch, wobei das als Modul ausgebildete Gasregelventil (1) und das als Modul ausgebildete Gassicherheitsventil (20) in Reihe angeordnet sind und das mindestens eine Gassicherheitsventil (20) in Gasströmungsrichtung vor dem Gasregelventil (1) angeordnet ist.

9. Gasregeleinheit nach zumindest einem der vorigen Ansprüche 7 bis 8, **dadurch gekennzeichnet, dass** das als Modul ausgebildete Gassicherheitsventil (20) ein Gehäuse (22), einen Ventilkörper und mindestens einen Ventilsitz (24) aufweist, wobei der mindestens eine Ventilsitz (24) durch Teile des Gehäuses (22) gebildet ist.

10. Gasregeleinheit nach zumindest einem der vorigen Ansprüche 7 bis 9, **dadurch gekennzeichnet, dass** ein einziges Gassicherheitsventil (20) vorgesehen und dieses als Doppel-Sicherheitsventil ausgebildet ist.

11. Gasregeleinheit nach zumindest einem der vorigen Ansprüche 7 bis 10, **dadurch gekennzeichnet, dass** das als Modul ausgebildete Gasregelventil (1) und das als Modul ausgebildete Gassicherheitsventil (20) jeweils kartuschenartige Gehäuseteile (7, 27) mit Mitteln (15) zur lösbaren Befestigung an einem Gasventilgehäuse (30), Lüftergehäuse (40) oder Krümmer aufweisen.

12. Gasregeleinheit nach dem vorigen Anspruch, **dadurch gekennzeichnet, dass** an den kartuschenartigen Gehäuseteilen (7, 27) jeweils außenseitig angeordnete Dichtmittel (13, 13', 33, 33') zur Abdichtung der Module an dem Gasventilgehäuse (30), Lüftergehäuse (40) oder Krümmer vorgesehen sind.

13. Gasventitgehäuse (30), Lüftergehäuse (40) oder Krümmer umfassend eine Gasregeleinheit (100) nach einem der vorigen Ansprüche 7 bis 12.

## Claims

1. Gas regulation valve comprising
- a housing (2) having a gas inlet,
- a valve body (3) which is held in the housing (2) and arranged so as to be movable in a first (Y1) and second axial direction (Y2),
- a valve seat (4),
- at least one first spring (8), which acts on the valve body (3) in the first axial direction (Y1),
- a shaft (5) which is movable in the axial direction (Y1, Y2) and indirectly engages with the valve body (3),
- a drive (6) which acts on the shaft (5) and moves it and thus the valve body (3) in predefined longitudinal portions in the axial direction (Y1 ,Y2) for opening and closing the gas regulation valve (1), wherein
- the gas regulation valve (1) is formed in its entirety as a replaceable module, wherein
- the valve body (3) is held by a membrane (9) and the gas enters between the membrane (9) and the valve seat (4) in the axial direction, so that a gas pressure acts in the first axial direction (Y1) against the membrane (9) and in the second, opposite axial direction (Y2) against the valve body (3), wherein
- a second spring (10) is arranged between the shaft (5) and the valve body (3) and acts on the valve body (3) in the second axial direction (Y2), and wherein the second spring (10) is arranged within the hollow valve body (3).

2. Gas regulation valve according to claim 1, **characterized in that** at least a part of the housing (2) is formed as an insert cartridge (7).

3. Gas regulation valve according to one of the preceding claims, **characterized in that** the drive (6) is an electronically actuated stepper motor.

4. Gas regulation valve according to the preceding claim, **characterized in that** a non-gas-tight stepper motor (6) is used.

5. Gas regulation valve according to one of the preceding claims, **characterized in that** the valve seat (4) is formed by parts of the housing (2) of the gas regulation valve (1).

6. Gas regulation valve according to one of the preceding claims 3 to 5, **characterized in that** a sealing plate (11) having a recess (12) is provided between the stepper motor (6) and the membrane (3), the shaft (5) extending through the recess (12).

7. Gas regulation unit in a modular design, in particular for regulating the amount of gas to be supplied to a gas burner, comprising a gas regulation valve (1) formed as a module, according to one of claims 1 to 6, and at least one gas safety valve (20) formed as a module.

8. Gas regulation unit according to the preceding claim, wherein the gas regulation valve (1) formed as a module and the gas safety valve (20) formed as a module are arranged in row and the at least one gas safety valve (20) is arranged upstream of the gas regulation valve (1) in the gas flow direction.

9. Gas regulation unit according to one of the preceding claims 7 to 8, **characterized in that** the gas safety valve (20) formed as a module has a housing (22), a valve body and at least one valve seat (24), wherein the at least one valve seat (24) is formed by parts of the housing (22).

10. Gas regulation unit according to one of the preceding claims 7 to 9, **characterized in that** only one gas safety valve (20) is provided and this is formed as a double safety valve.

11. Gas regulation unit according to one of the preceding claims 7 to 10, **characterized in that** the gas regulation valve (1) formed as a module and the gas safety valve (20) formed as a module each have cartridge-like housing parts (7, 27) having means (15) for releasably fastening to a gas valve housing (30), a ventilating fan housing (40) or a manifold.

12. Gas regulation unit according to the preceding claim, **characterized in that** sealing means (13, 13', 33, 33') arranged on the outside of each of the cartridge-like housing parts (7, 27) are provided for sealing the modules on the gas valve housing (30), the ventilating fan housing (40) or the manifold.

13. Gas valve housing (30), ventilating fan housing (40) or manifold, comprising a gas regulation unit (100) according to one of preceding claims 7 to 12.

## Revendications

1. Soupape de régulation de gaz, comprenant
- un boîtier (2) comprenant une arrivée de gaz,
- un corps de soupape (3) maintenu dans le boîtier (2), disposé de manière mobile dans une première (Y1) et dans une deuxième direction axiale (Y2),
- un siège de soupape (4),
- au moins un premier ressort (8), qui agit sur le corps de soupape (3) dans la première direction axiale (Y1),
- un axe (5) mobile dans une direction axiale (Y1, Y2), se trouvant en prise indirectement avec le corps de soupape (3),
- un entraînement (6) agissant sur l'axe (5), lequel déplace ce dernier et, ce faisant, le corps de soupape (3) dans des sections longitudinales prédéfinies dans une direction axiale (Y1, Y2) afin d'ouvrir et de fermer la soupape de régulation de gaz (1),
- la soupape de régulation de gaz (1) étant réalisée dans sa globalité sous la forme d'un module interchangeable,
que le corps de soupape (3) est maintenu par une membrane (9), et en ce que l'arrivée de gaz se fait dans une direction axiale entre la membrane (9) et le siège de soupape (4) de sorte qu'une pression de gaz agit dans la première direction axiale (Y1) à l'encontre de la membrane (9) et, dans la deuxième direction axiale (Y2) opposée, à l'encontre du corps de soupape (3),
ce qu'est disposé, entre l'axe (5) et le corps de soupape (3), un deuxième ressort (10), qui agit sur le corps de soupape (3) dans la deuxième direction axiale (Y2), que le deuxième ressort (10) est disposé à l'intérieur du corps de soupape (3) réalisé de manière creuse.

2. Soupape de régulation de gaz selon la revendication 1, **caractérisée en ce qu'**au moins une partie du boitier (2) est réalisée sous la forme d'une cartouche à insérer (7).

3. Soupape de régulation de gaz selon au moins l'une quelconque des revendications précédentes, **caractérisée en ce que** l'entraînement (6) est un moteur pas à pas à pilotage électronique.

4. Soupape de régulation de gaz selon la revendication précédente, **caractérisée en ce qu'**un moteur pas à pas (6) non étanche aux gaz est utilisé.

5. Soupape de régulation de gaz selon au moins l'une quelconque des revendications précédentes, **caractérisée en ce que** le siège de soupape (4) est formé par des parties du boîtier (2) de la soupape de régulation de gaz (1).

6. Soupape de régulation de gaz selon au moins l'une quelconque des revendications 3 à 5, **caractérisée en ce qu'**une plaque étanche (11) pourvue d'un évidement (12) est prévue entre le moteur pas à pas (6) et la membrane (3), l'axe (5) s'étendant à travers l'évidement (12).

7. Unité de régulation de gaz de type modulaire, servant en particulier à réguler la quantité de gaz à amener au brûleur de gaz, comprenant une soupape de régulation de gaz (1), réalisée sous la forme d'un module, selon au moins l'une quelconque des revendications 1 à 6 et au moins une soupape à gaz de sécurité (20) réalisée sous la forme d'un module.

8. Unité de régulation de gaz selon la revendication précédente, la soupape de régulation de gaz (1) réalisée sous la forme d'un module et la soupape à gaz de sécurité (20) réalisée sous la forme d'un module étant disposées de manière alignée, et l'au moins une soupape à gaz de sécurité (20) étant disposée dans la direction d'écoulement de gaz avant la soupape de régulation de gaz (1).

9. Unité de régulation de gaz selon au moins l'une quelconque des revendications 7 à 8, **caractérisée en ce que** la soupape à gaz de sécurité (20) réalisée sous la forme d'un module présente un boîtier (22), un corps de soupape et au moins un siège de soupape (24), l'au moins un siège de soupape (24) étant formé par des parties du boîtier (22).

10. Unité de régulation de gaz selon au moins l'une quelconque des revendications 7 à 9, **caractérisée en ce qu'**une seule soupape à gaz de sécurité (20) est prévue, et **en ce que** cette dernière est réalisée sous la forme d'une double soupape de sécurité.

11. Unité de régulation de gaz selon au moins l'une quelconque des revendications précédentes 7 à 10, **caractérisée en ce que** la soupape de régulation de gaz (1) réalisée sous la forme d'un module et la soupape à gaz de sécurité (20) réalisée sous la forme d'un module présentent respectivement des parties de boîtier (7, 27) de type cartouche pourvues de moyens (15) destinés à être fixés de manière amovible au niveau d'un boîtier de soupape de gaz (30), d'un boîtier de ventilateur (40) ou d'un collecteur.

12. Unité de régulation de gaz selon la revendication précédente, **caractérisée en ce que** respectivement des moyens étanches (13, 13', 33, 33') disposés côté extérieur servant à étanchéifier les modules au niveau du boîtier de soupape de gaz (30), du boîtier de ventilateur (40) ou du collecteur sont prévus au niveau des parties de boîtier (7, 27) de type cartouche.

13. Boîtier de soupape de gaz (30), boîtier de ventilateur (40) ou collecteur comprenant une unité de régulation de gaz (100) selon l'une quelconque des revendications précédentes 7 à 12.
